Europäisches Patentamt

European Patent Office

Office européen des brevets

(19)

(11) Veröffentlichungsnummer: **0 175 076**
**B1**

# EUROPÄISCHE PATENTSCHRIFT

(12)

(45) Veröffentlichungstag der Patentschrift:
**18.10.89**

(21) Anmeldenummer: **85108400.4**

(22) Anmeldetag: **06.07.85**

(51) Int. Cl.⁴: **F 16 L 5/02**, F 16 L 41/04

(54) Durchführungen durch Wandungen von Druckbehältern.

(30) Priorität: **22.08.84 DE 3430902**

(43) Veröffentlichungstag der Anmeldung:
**26.03.86 Patentblatt 86/13**

(45) Bekanntmachung des Hinweises auf die Patenterteilung:
**18.10.89 Patentblatt 89/42**

(84) Benannte Vertragsstaaten:
**AT BE CH DE FR GB IT LI LU NL SE**

(56) Entgegenhaltungen:
**WO-A-84/00398**
**AT-B- 355 940**
**DE-A- 2 526 985**
**FR-A- 2 520 840**
**GB-A- 1 543 604**

(73) Patentinhaber: **Bosch-Siemens Hausgeräte GmbH, Hochstrasse 17, D-8000 München 80 (DE)**
Patentinhaber: **Coca-Cola Company, P.O.Drawer 1734, Atlanta Georgia 30301 (US)**

(72) Erfinder: **Aschberger, Matthias, Dipl.-Ing., Am Läutenberg 9/1, D-7928 Giengen (DE)**

(74) Vertreter: **Rode, Franz et al, BOSCH-SIEMENS HAUSGERÄTE GMBH Patent- und Vertragswesen Hochstrasse 17, D-8000 München 80 (DE)**

EP 0 175 076 B1

## Beschreibung

Die vorliegende Erfindung bezieht sich auf Durchführungen durch Wandungen von unter erhöhtem Innendruck stehenden Vorratsbehältern, insbesondere von Vorratsbehältern zum Karbonisieren von Wasser in Getränkeautomaten, wobei die Vorratsbehälterwandung im Bereich der Durchführung als Wandungsring mit einem im wesentlichen zylindrischen Innenwandungsabschnitt ausgebildet ist und daß ein durch diesen Wandungsring mit einem zylindrischen Teilabschnitt hindurchgeführtes Durchführungsstück im Bereich des Behälterinneren einen die Durchführungsöffnung durch die Vorratsbehälter-Wandung überdeckenden Flansch aufweist.

Beispielsweise für den Einsatz in Getränkeautomaten werden Vorratsbehälter verwendet, in welchen bedarfsweise zugeführtes Frischwasser unter erhöhtem Gasdruck mit ebenfalls zugeführtem $CO_2$-Gas angereichert wird. Um den Karbonisierungsvorgang zu fördern und um ein angenehm kühles Erfrischungsgetränk nach Mischung des karbonisierten Wassers mit einem Getränkekonzentrat zu erzielen, ist es zumindest zweckmäßig, den Vorratsbehälter zu kühlen. Sowohl zur Überwachung des Flüssigkeitsstandes innerhalb des Vorratsbehälters als auch zur Erfassung des Kühlungszustandes, müssen im Vorratsbehälter Sensoren angeordnet werden, welche nach außen geführt, an eine Auswerteschaltung anschließbar sind. Neben der Auslaßöffnung für das karbonisierte Wasser ist es gegebenenfalls auch erforderlich, eine weitere Wandungsdurchführung für Anschlußkabel vorzusehen, durch welche beispielsweise eine Umwälzpumpe im Inneren des Vorratsbehälters mit Strom versorgt wird.

Die Aufzählung zeigt, daß eine Reihe von Durchführungen für den Vorratsbehälter erforderlich sind. Insbesondere, da der Vorratsbehälter unter erhöhtem Innendruck steht, ist es besonders wichtig, daß diese Durchführungen sowohl flüssigkeitsdicht als auch gasdicht ausgebildet sind.

Gasdichte Durchführungen sind im Prinzip hinlänglich bekannt. So ist es beispielsweise möglich, die Durchführungsöffnungen zu vergießen, zu verlöten, zu verpressen, Konusflansche vorzusehen, oder formschlüssige Maßnahmen unter Verwendung von angepreßten Dichtmaterialien anzuwenden. Insbesondere im Hinblick auf die Mehrzahl der für einen Vorratsbehälter erforderlichen Durchführungen ist der Herstellungsaufwand für wasser- und gasundurchlässige Durchführungen nach bekannten Maßnahmen relativ aufwendig. Da der Vorratsbehälter auch Wärmeschwankungen laufend unterzogen sein kann, welche durch die unterschiedlichen Wärmeausdehnungskoeffizienten der verwendeten Teile zu Spannungen und hohen Belastungen im Bereich der Durchführungen führen, sind einige der bekannten Maßnahmen ohnehin nicht dauerhaft haltbar.

Es ist eine Maßnahme zur Durchführung von Rohrleitungen durch eine Gehäusewandung bekannt (WO 84/00398), bei der die Gehäusewandung im Bereich der Durchführung verstärkt ausgebildet ist und in diesem verstärkten Bereich eine zylindrische Durchführungsöffnung aufweist, durch die ein ebenfalls zylindrisches Durchführungsstück durchgeführt ist. Axial ist dieses Durchführungsstück in der Durchführungsöffnung durch einen Flansch und einen Schraubring gesichert. Dieser Schraubring verklemmt auch einen Dichtungsring in einer konischen Erweiterung der Durchführungsöffnung.

Die Aufgabe der vorliegenden Erfindung ist es nunmehr, Durchführungen durch Wandungen von unter erhöhtem Innendruck stehenden Vorratsbehältern bereitzustellen, welche vielfältig einsetzbar, einfach in der Herstellung und bei den auftretenden Belastungen funktionssicher sind, d.h., daß sich Befestigungsmaßnahmen nicht auf die Dichtfunktion auswirken und Kräfte, die auf das Durchführungsstück wirken, eine Beeinträchtigung der Dichtwirkung verursachen.

Eine dieser Anforderung gerecht werdende Durchführung ist erfindungsgemäß dadurch gekennzeichnet, daß in einer durch Radialwandungen begrenzten Ringnut des zylindrischen Teilabschnitts des Durchführungsstücks (5, 5') ein sich innerhalb der zylindrischen Durchführungsöffnung an deren Innenwandung anlegender Dichtring (7) angeordnet ist.

Eine nach diesen Merkmalen ausgestaltete Durchführung erfordert im Vorratsbehälter lediglich Durchführungsöffnungen mit im wesentlichen zylindrischen Innenwandungs-Abschnitten. Das Durchführungsstück ist im Bereich des zylindrischen Innenwandungs-Abschnitts ebenfalls zylindrisch ausgestaltet, und zwar mit einem Durchmesser, welcher geringfügig kleiner als der Durchmesser der Durchführungsöffnung ist. Damit kann das Durchführungsstück problemlos in die Durchführungsöffnung innerhalb der Wandung des Vorratsbehälters eingeführt werden. Das Durchführungsstück trägt auf dem dem Inneren des Vorratsbehälters zugewandten Ende einen Flansch, welcher größer als die Durchführungsöffnung ist, so daß das Durchführungsstück lediglich bis zum Anschlag an diesen Flansch – die Ausbildung von Flansch-Teilbereichen ist ausreichend – in die Durchführungsöffnung hineingeschoben werden kann. Dichtmaßnahmen in diesem Bereich sind nicht erforderlich. Zur flüssigkeits- und gasdichten Abdichtung dient der erfindungsgemäß in einer Ringnut innerhalb des zylindrischen Abschnitts des Durchführungsstücks angeordnete Dichtring. Nachdem das Durchführungsstück sich mit seinem Flansch bzw. den Flanschabschnitten an der Innenwandung des Vorratsbehälters durch den erhöhten Druck im Behälterinneren mechanisch zuverlässig anliegt, bewirkt dieser erhöhte Innendruck innerhalb des zylindrischen Spaltes zwischen dem Durchführungsstück und der Durchführungsöffnung eine ausreichende Verformung des Dichtrings derart, daß der sich zuverlässig gasdicht und flüssigkeitsdicht am Durchführungsstück und an der Durchführungsöffnung anlegt. Bei Absenkung des erhöhten Innendrucks auf normalen Atmosphärendruck wird der Dichtring wieder entlastet, so daß auch die Möglichkeit zur Auswechslung des Durchführungsstücks in einfacher Weise gegeben ist.

Nach einer bevorzugten Ausgestaltung der erfindungsgemäßen Durchführung ist das Durchführungsstück aus Kunststoff gefertigt. Damit sind auch für Massenfertigungen besonders günstige Voraussetzungen gegeben. Aufgrund der erfindungsgemäß getroffenen Maßnahmen wirken sich Unterschiede im Temperatur-Ausdehnungskoeffizienten zum Druckbehälter nicht nachteilig aus. Auch Probleme im Hinblick auf Klebefähigkeit oder Vergießfähigkeit sind nicht zu berücksichtigen.

Nach einer weiteren bevorzugten Ausgestaltung ist die erfindungsgemäße Durchführung dadurch gekennzeichnet, daß das Durchführungsstück in der Durchführungsöffnung der Vorratsbehälterwandung durch eine in einer weiteren Ringnut radial aufgeschobenen, U-förmig ausgebildeten Ringabschnittsscheibe außerhalb des Vorratsbehälters gegen axiale Verschiebung gehalten ist. Diese in die Ringnut des Durchführungsstücks eingeschobene Ringabschnittsscheibe soll eine Sicherung dagegen sein, daß durch außen zugeführte mechanische Belastung das Durchführungsstück gegen den Innendruck des Vorratsbehälters in diesen hineingeschoben wird. Die Ringabschnittsscheibe dient aber auch zusätzlich als Montagehilfe. Ansonsten stellt diese Ringscheibe sicher, daß die Betriebslage des Durchführungsstücks in der Durchführungsöffnung der Vorratsbehälterwandung eingehalten wird und der Dichtring seine Dichtfunktion aufgabengemäß übernehmen kann.

Nach einer Weiterbildung ist die erfindungsgemäße Durchführung für elektrische Leitungen dadurch gekennzeichnet, daß die elektrischen Leitungen mit zylindrischem Querschnitt ausgebildet, durch eine axiale Bohrung durch das Durchführungsstück unter axialer Verklemmung eines Dichtrings zur radialen Anlage am Außendurchmesser der elektrischen Leitung und am in diesem Bereich erweiterten Innendurchmesser eines Bohrungsabschnitts des Durchführungsstücks durchgeführt ist. Für die elektrische Leitung ist dadurch in der Durchführung für eine zuverlässige flüssigkeits- und gasdichte Abdichtung und für eine mechanische Festklemmung gesorgt.

Zur Durchführung von Sensoren als elektrische Verbindungen ist es vorteilhaft, die erfindungsgemäße Durchführung dahingehend auszugestalten, daß der Sensor L-förmig abgewinkelt mit zylindrischem Querschnitt stabförmig ausgebildet ist, daß der Sensor mit dem einen Schenkel durch die axiale Bohrung durch das Durchführungsstück durchgeführt ist und daß dieser Sensor mit dem anderen Schenkel bajonettverschlußartig mit dem Durchführungsstück und der axialen Klemmung eines Dichtrings zur Anlage an dem in diesem Bereich erweiterten Innendurchmesser eines Bohrungsabschnitts des Durchführungsstücks und dem Außendurchmesser des hindurchragenden Sensorschenkels verklemmt ist. Zur Verklemmung des Dichtrings ist eine Buchse im Durchführungsstück angeordnet. Derartige Sensoren dienen zur Erfassung des Flüssigkeitsstandes innerhalb des Vorratsbehälters oder zur Erfassung von Temperaturwerten bzw. von Eisbildungen.

Bei Sensoren, welche eine Eisbildung innerhalb des Vorratsbehälters erfassen sollen, kann die Gefahr bestehen, daß diese durch die Eisbildung verbogen werden, insbesondere dann, wenn diese relativ weit in den Vorratsbehälter hineinragen. Um dieser Beeinflussung des Sensors entgegenzuwirken, ist es zweckmäßig, das Durchführungsstück zellenartig in das Vorratsbehälter-Innere verlängert auszubilden.

Nach den Merkmalen der Erfindung ausgestaltete Ausführungsbeispiele sind anhand der Zeichnung im folgenden näher beschrieben. Es zeigen:

Fig. 1 einen Vorratsbehälter in einer Seitenansicht,

Fig. 2 diesen Vorratsbehälter in einer Draufsicht,

Fig. 3 eine erste Seitenansicht eines Durchführungsstücks durch diesen Vorratsbehälter,

Fig. 4 eine zweite Seitenansicht dieses Durchführungsstücks,

Fig. 5 eine Draufsicht auf dieses Durchführungsstück und

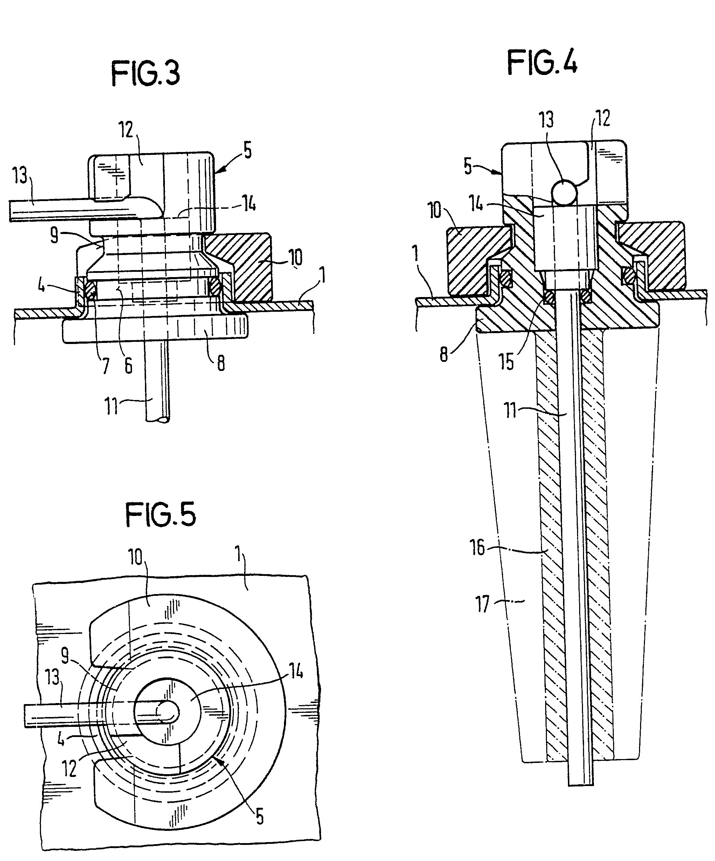

Fig. 5 ein Durchführungsstück für einen Flüssigkeitsanschluß in einer Seitenansicht.

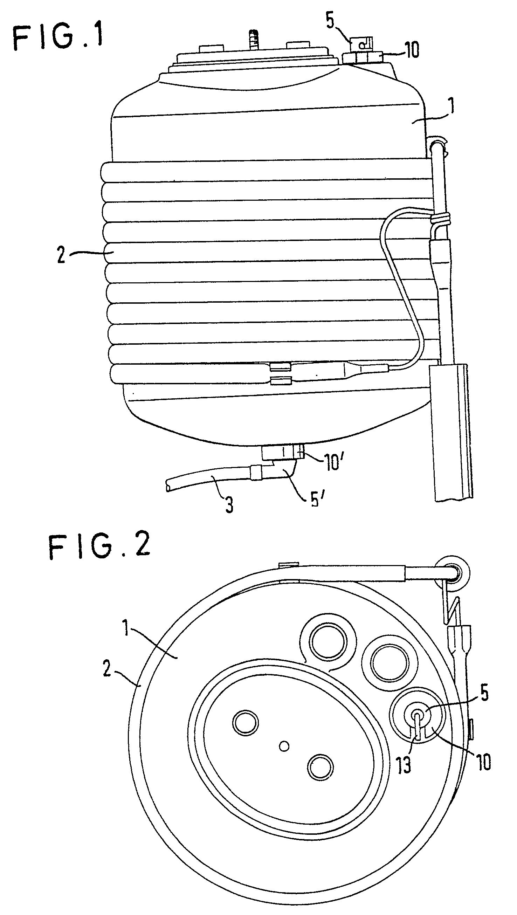

Der Vorratsbehälter 1 gemäß den Fig. 1 und 2 dient als Karbonisator für Getränkeautomaten. Diesem über Kühlschlangen 2 gekühlten Karbonisator wird über eine Leitung 3 karbonisiertes Wasser entnommen. Entsprechend muß diesem Vorsatzbehälter Frischwasser und $CO_2$-Gas auch wieder zugeführt werden. Außerdem sind Sensoren erforderlich, welche den jeweiligen Flüssigkeitsstand im Vorratsbehälter sowie die Bildung eines Eispanzers überwacht. Gegebenenfalls ist auch eine Umwälzpumpe im Vorratsbehälter 1 angeordnet, welche mit Antriebsstrom versorgt werden muß.

Zu all diesen Zwecken ist es erforderlich, Durchführungen durch die Wandung des Vorratsbehälters 1 vorzusehen.

Eine derartige Durchführung für einen Sensor ist in den Fig. 3 bis 5 dargestellt. Zur Aufnahme dieser Durchführung ist die Wandung des Vorratsbehälters 1 nach außen zu einem zylinderförmigen Ringabschnitt 4 herausgezogen. In diesen zylinderförmigen Ringabschnitt 4 ist das Durchführungsstück 5 eingesetzt. Dieses trägt in einer Ringnut 6 innerhalb eines zylindrischen Teilabschnitts einen Dichtring 7 aus elastischem Material, welcher sich am Außendurchmesser der Ringnut 6 und am Innendurchmesser des zylindrischen Ringabschnitts 4 der Vorratsbehälterwandung anlegt. Das Durchführungsstück 5 trägt einen die Durchführungsöffnung in der Behälterwandung überdeckenden Flansch 8, welcher an der Innenwandung des Vorratsbehälters anliegt. In eine weitere Ringnut 9 des Durchführungsstücks 5 greift eine Ringabschnittsscheibe 10 außerhalb des Vorratsbehälters 1 ein. Durch diese Ringabschnittsscheibe 10 wird das Durchführungsstück 5 mechanisch in der Durchführungsöffnung der Behälterwandung gehalten. Die flüssigkeits- und

gasdichte Abdichtung erfolgt lediglich über den Dichtring 7, welcher durch den im Inneren des Vorratsbehälters 1 auftretenden Druck axial an den äußeren Flansch der Ringnut 6 gedrückt wird und dadurch sich verstärkt an der Innenwandung des zylindrischen Ringabschnitts 4 der Behälterwandung und am Außendurchmesser der Ringnut 6 anliegt. Die Ringabschnittsscheibe 10 ist U-förmig ausgebildet, so daß sie seitlich in die Ringnut 9 des Durchführungsstücks 5 eingeschoben werden kann.

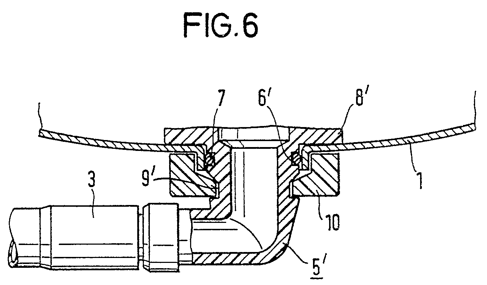

Das Ausführungsbeispiel gemäß Fig. 6 weist prinzipiell alle diese Funktionsteile ebenfalls auf. In diesem Fall dient das Durchführungsstück 5' als Anschluß für eine Flüssigkeitsleitung.

Bei der Anordnung gemäß den Fig. 3 bis 5 dient das Durchführungsstück 5 zur Aufnahme eines stabförmigen Sensors 11, welcher in das Innere des Vorratsbehälters 1 hineinragt. Zur Aufnahme des Sensorstabes 11 weist das Durchführungsstück 5 eine axiale Bohrung mit abgestuften Durchmessern auf. Der Sensorstab 11 ist L-förmig abgekröpft ausgebildet, so daß er über eine bajonettverschlußartige Aussparung 12 im Durchführungsstück 5 mit diesem gegen axiale Verschiebung formschlüssig verrastbar ist. Der abgewinkelte Teil 13 des Sensorstabes 11 wirkt dabei auf eine Buchse 14, durch welche ein Dichtring 15 derart axial beeinflußt wird, daß dieser den Sensorstab 11 gegen das Durchführungsstück 5 flüssigkeits- und gasdicht abdichtet.

In Fig. 4 ist strichpunktiert ein Verlängerungsstück 16 mit Stabilisierungsstegen 17 dargestellt, welches gegebenenfalls am Durchführungsstück 5 angeordnet sein kann, um den in das Innere des Vorratsbehälters 1 hineinragenden Sensor 11 zu stabilisieren.

## Patentansprüche

1. Durchführungen durch Wandungen von unter erhöhtem Innendruck stehenden Vorratsbehältern, insbesondere von Vorratsbehältern zum Karbonisieren von Wasser in Getränkeautomaten, wobei die Vorratsbehälterwandung im Bereich der Durchführung als Wandungsring mit einem im wesentlichen zylindrischen Innenwandungsabschnitt ausgebildet ist und daß ein durch diesen Wandungsring mit einem zylindrischen Teilabschnitt hindurchgeführtes Durchführungsstück im Bereich des Behälterinneren einen die Durchführungsöffnung durch die Vorratsbehälter-Wandung überdeckenden Flansch aufweist, dadurch gekennzeichnet, daß in einer durch Radialwandungen begrenzten Ringnut des zylindrischen Teilabschnitts des Durchführungsstücks (5, 5') ein sich innerhalb der zylindrischen Durchführungsöffnung an deren Innenwandung anlegender Dichtring (7) angeordnet ist.

2. Durchführungen nach Anspruch 1, dadurch gekennzeichnet, daß das Durchführungsstück (5, 5') aus Kunststoff gefertigt ist.

3. Durchführungen nach einem der Ansprüche 1 oder 2, dadurch gekennzeichnet, daß das Durchführungsstück (5, 5') in der Durchführungsöffnung der Vorratsbehälterwandung (1) durch eine in eine weitere Ringnut (9, 9') radial aufgeschobene, U-förmig ausgebildete Ringabschnittsscheibe (10) gegen axiale Verschiebung gehalten ist.

4. Durchführungen nach einem der Ansprüche 1 bis 3 für elektrische Leitungen, dadurch gekennzeichnet, daß die elektrischen Leitungen mit zylindrischem Querschnitt ausgebildet durch eine axiale Bohrung durch das Durchführungsstück (5) unter axialer Klemmung eines Dichtrings (15) zur radialen Anlage am Außendurchmesser der elektrischen Leitung und am erweiterten Innendurchmesser eines Bohrungsabschnitts des Durchführungsstücks (5) durchgeführt ist.

5. Durchführungen nach Anspruch 4 für einen Sensorleiter als elektrische Durchführungsleitung, dadurch gekennzeichnet, daß der Sensorleiter (11) mit einem zylindrischen Querschnitt stabförmig ausgebildet und L-förmig abgewinkelt ist, daß der Sensorleiter (11) mit dem einen Schenkel durch eine axiale Bohrung durch das Durchführungsstück (5) durchgeführt ist und daß dieser Sensorleiter mit dem anderen Schenkel (13) bajonettverschlußartig mit dem Durchführungsstück (5) unter axialer Klemmung eines Dichtrings (15) zur Anlage an dem Innendurchmesser des Bohrungsabschnitts des Durchführungsstücks (5) und dem Außendurchmesser des hindurchragenden Sensorschenkels (11) verklemmt ist.

6. Durchführung nach Anspruch 5, dadurch gekennzeichnet, daß zur Klemmung des Dichtrings (15) eine Buchse (14) in dem Durchführungsstück (5) angeordnet ist, gegen welche der L-förmig abgewinkelte Abschnitt (13) des Sensorstabs (11) axial in der Bajonettverschluß-Lage wirkt.

## Claims

1. Passages through walls of supply containers standing under increased internal pressure, in particular of supply containers for the carbonising of water in automatic beverage dispensers, wherein the supply container wall is constructed in the region of the passage as wall ring with a substantially cylindrical inward wall portion and that a passage member, which is led by a cylindrical partial portion through this wall ring, in the region of the interior of the container displays a flange covering the passage opening through the supply container wall, characterised thereby, that a sealing ring (7), which within the cylindrical passage opening lays itself against its inward wall, is arranged in an annular groove, which is bounded by radial walls, of the cylindrical partial portion of the passage member (5, 5').

2. Passages according to claim 1, characterised thereby, that the passage member (5, 5') is produced of synthetic material.

3. Passages according to one of the claims 1 and 2, characterised thereby, that the passage member (5, 5') is retained against axial displacement in the passage opening of the supply container wall (1) by a ring portion disc (10), which is formed in U-shape and pushed radially into a further annular groove (9, 9').

4. Passages according to one of the claims 1 to 3 for electrical conductors, characterised thereby, that the electrical conductor is formed with cylindrical cross-section and passed through the passage member (5) under axial clamping of a sealing ring (15) for radial bearing against the external diameter of the electrical conductor and at the enlarged internal diameter of a bore portion of the passage member (5).

5. Passages according to claim 4 for a sensor conductor as electrical feedthrough conductor, characterised thereby, that the sensor conductor (11) is formed in rod shape with a cylindrical cross-section and bent in L-shape, that the sensor conductor (11) is passed by the one limb through an axial bore of the passage member (5) and that this sensor conductor (11) is clamped by the other limb (13) in the manner of a bayonet fastener together with the passage member (5) under axial clamping of a sealing ring (15) for bearing against the internal diameter of the bore portion of the passage member (5) and the external diameter of the sensor limb (11) projecting through.

6. Passage according to claim 5, characterised thereby, that a bushing (14), against which the portion (13) bent into L-shape of the sensor rod (11) sits axially in the bayonet fastener position, is arranged in the passage member (5) for the clamping of the sealing ring (15).

## Revendications

1. Traversées par des parois de réservoirs soumis à une pression intérieure accrue, notamment de réservoirs pour la gazéification d'eau dans des distributeurs de boissons, la paroi du réservoir étant réalisée dans la zone de la traversée comme anneau de paroi avec une portion de paroi intérieure sensiblement cylindrique, et une pièce de traversée comportant une portion cylindrique passant à travers cet anneau de paroi et présentant à l'intérieur du réservoir une collerette recouvrant l'ouverture de passage à travers la paroi du réservoir, caractérisées par le fait que dans une gorge annulaire, délimitée par des parois radiales, de la portion cylindrique de la pièce de traversée (5, 5') est disposée une bague d'étanchéité (7) appliquée dans l'ouverture de passage cylindrique contre la paroi intérieure de celle-ci.

2. Traversées selon la revendication 1, caractérisées par le fait que la pièce de traversée (5, 5') est fabriquée en matière plastique.

3. Traversées selon l'une des revendications 1 ou 2, caractérisées par le fait que la pièce de traversée (5, 5') est immobilisée en translation axiale dans l'ouverture de passage de la paroi (1) de réservoir par un disque en segment d'anneau (10) qui est réalisé en forme de U et engagé radialement dans une gorge annulaire (9, 9') supplémentaire.

4. Traversées selon l'une des revendications 1 à 3 pour lignes électriques, caractérisées par le fait que les lignes électriques sont réalisées avec une section cylindrique et passent par un trou axial à travers la pièce de traversée (5) avec serrage axial d'une bague d'étanchéité (15) appliquée radialement contre le diamètre extérieur de la ligne électrique et contre le diamètre intérieur élargi d'une portion du trou de la pièce de traversée (5).

5. Traversées selon la revendication 4 pour un conducteur détecteur en tant que ligne de traversée électrique, caractérisées par le fait que le conducteur détecteur (11) est réalisé sous forme de barre de section cylindrique et coudé en L, qu'une branche du conducteur détecteur (11) passe à travers un trou axial de la pièce de traversée (5) et que l'autre branche (13) de ce conducteur détecteur est bloquée à la manière d'un système de blocage à baïonnette, avec la pièce de traversée (5) avec serrage axial d'une bague d'étanchéité (15) qui est appliquée contre le diamètre intérieur de la portion de trou de la pièce de traversée (5) et contre le diamètre extérieur de la branche (11) du conducteur passant à travers cette bague.

6. Traversées selon la revendication 5, caractérisées par le fait que pour le serrage de la bague d'étanchéité (15) une douille (14) est disposée dans la pièce de traversée (5), douille contre laquelle agit axialement la portion (13), coudée en L, de la barre détecteur (11), lorsqu'elle est en position de blocage à baïonnette.

# FIG.1

# FIG.2

# FIG.3

# FIG.4

# FIG.5

# FIG.6